# EUROPÄISCHE PATENTSCHRIFT

(11) **EP 3 604 231 B1**
(45) Veröffentlichungstag und Bekanntmachung des Hinweises auf die Patenterteilung: **15.06.2022**
(21) Anmeldenummer: 19181986.1
(22) Anmeldetag: 24.06.2019
(51) Int. Cl.: C02F 1/00, C02F 11/02, C02F 101/16

(54) **GÜLLE-VITALISIERER**
SLURRY VITALIZER
DISPOSITIF DE REVITALISATION DE LISIER

(30) Priorität: 01.08.2018 DE 202018104431 U
(43) Veröffentlichungstag der Anmeldung: 05.02.2020
(73) Patentinhaber: Weber, Eckhard, 34289 Zierenberg (DE)
(72) Erfinder: WEBER, Eckhard, 34289 Zierenberg (DE)
(74) Vertreter: Walther Bayer Faber Patentanwälte PartGmbB

(56) Entgegenhaltungen:
- EP-A1- 1 076 037
- DE-U1-202011 005 559
- Dirk Möller: "Vitalisiertes Wasser nach dem Vorbild der Natur", Google Lebens|t|räume, 31. Juli 2011 (2011-07-31), XP055630087, Gefunden im Internet: URL:http://www.weberbio.de/media/Lebenstra eume-Vitalisiertes-Wasser.pdf [gefunden am 2019-10-08]
- Eckhard Weber: "Bioenergie: unermessliches Kraftreservoir", Google Lebens|t|räume, 30. September 2008 (2008-09-30), XP055630089, Gefunden im Internet: URL:http://www.weberbio.de/media/Bioenergi e2.pdf [gefunden am 2019-10-08]

## Beschreibung

Die Erfindung betrifft eine Vorrichtung zur Aktivierung von Mikroorganismen in Gülle, umfassend einen ersten Behälter mit einem oberen Ende und einem unteren Ende, mit in dem Behälter angeordnetem organischen Stoff und mineralischen Stoff.

### STAND DER TECHNIK

Aus der DE 4020914 A1 ist ein Verfahren zur Entfernung oder Verminderung des Ammoniakgehalts aus mit Ammoniak belasteten Gasen unter selektiver Stickstoffbildung unter weitgehender Vermeidung der Bildung von Stickoxiden bekannt. Das Verfahren ist nach einer entsprechenden Vorbehandlung, auch für den Ammoniak oder Ammonium-Ionen-Gehalt von Wässern und Abwässern, beispielsweise landwirtschaftlichen Abwässern, wie Gülle oder Jauche oder kommunalen Wässern, anwendbar. Dabei wird das Ammoniak oder Ammonium-Ionen enthaltende Abwasser auf einen PH-Wert oberhalb von etwa 10,5 gebracht, falls es nicht bereits einen solchen PH-Wert aufweist. Dies kann durch Zusatz von Base, beispielsweise Natronlauge, geschehen. Anschließend wird das Ammoniak zweckmäßigerweise durch Einblasen eines Gases aus dem Wasser ausgetrieben ("Strippen"). Als solches "Stripgas" kann kalte oder erhitzte Luft verwendet werden. Besonders zweckmäßig ist es, dass gereinigte Abgas, das noch heiß aus der katalytischen Reinigung austritt, als Stripgas zu verwenden. Bei einem solchen Verfahren, bei dem Ammoniak oder Ammoniumionengehalt aus Abwässern entfernt werden soll, benötigt man eine Einrichtung, in welcher man das Ammoniak bzw. die Ammonium-Ionen der wässrigen Lösung in die Gasphase überführt. Zweckmäßigerweise sieht man hier einen geschlossenen Behälter vor, welcher einen Zulauf für das Ammoniak oder Ammoniumionen enthaltende Abwasser aufweist, einen Ablauf für das gereinigte Abwasser, eine Zuführung für Strippgas, eine Zuführung für eine Base, beispielsweise Natronlauge, eine Messeinrichtung zur Bestimmung des PH-Werts und der Temperatur, eine Rühreinrichtung und eine Abführung für das ausgetriebene Ammoniak enthaltende Gas.

Dabei benutzt man übliche Festbett- oder Wirbelschichtreaktoren, welche Öffnungen für die Zuführung des zu reinigenden Gases, für die Abführung des gereinigten Gases und gegebenenfalls Öffnungen für Einrichtungen zur Temperaturkontrolle aufweisen. Liegt das katalytische Gemisch als Vollkontakt vor, das heißt ohne Träger, liegen die Katalysatorpartikel zweckmäßigerweise in Form von Pulvern, Granulaten, Kugeln, Perlen, Extrudat oder anderen Schüttgutformen vor. Liegt das katalytisch aktive Gemisch auf einem Träger vor, können im Prinzip beliebige Trägerformen eingesetzt werden. Bei einem Wirbelschichtverfahren empfiehlt es sich, Katalysatorteilchen bzw. Trägerkatalysatorteilchen mit Talghülsen von etwa 0,3 mm bis 0,2 mm Durchmesser einzusetzen, insbesondere in Form von Granulaten, Kugeln, Perlen oder als gebrochenes Extrudat. Dabei wird angegeben, dass das mit Ammoniak belastete Gas bei einer Temperatur zwischen 20° C und 500° C mit einem Katalysator kontaktiert wird, der ein katalytisch aktives Gemisch aus Edelmetall und Übergangsmetalloxide im Molverhältnis 1:10 bis 1:200 aufweist, wobei das Edelmetall ausgewählt ist aus der Platin, Palladium, Rhodium, Iridium und anderen Gemischen umfassenden Gruppe und das Übergangsmetalloxid ausgewählt ist aus der Gruppe der Molybdänoxide, Vanadiumoxide und deren Gemischen.

Ein Verfahren und eine Vorrichtung der zuvor beschriebenen Art ist mit erheblichen Investitions-, Betriebs-, und Wartungskosten verbunden. Für die Wartung, Austausch und Reparatur von beweglichen Teilen wie beispielsweise ein Rührwerk und Gebläse muss der Betrieb unterbrochen werden. Ferner ist die Prozessüberwachung aufwendig.

Aus der Veröffentlichung von Dirk Möller "Vitalisiertes Wasser nach dem Vorbild der Natur", Lebensträume von Wolfgang Maiworm, Johanniterhof Seminare vom 31.07.2011, XP055630087 geht ein Aktivator für Wasser hervor.

Aus der Veröffentlichung von Eckhard Weber "Bioenergie: unermessliches Kraftreservoir", Lebensträume von Wolfgang Maiworm, Johanniterhof Seminare vom 30.09.2008, XP055630089 geht ein Vitalisierer für Gülle hervor.

### OFFENBARUNG DER ERFINDUNG

Es ist daher die Aufgabe der vorliegenden Erfindung, eine verbesserte Vorrichtung zur Aktivierung von Mikroorganismen in Gülle, insbesondere zur Vitalisierung von Gülle, bereitzustellen, mit der kostengünstig und zuverlässig die für den Rotteprozess der Gülle notwendigen Mikroorganismen aktiviert werden und somit insbesondere auch der Ammoniakgehalt verringert wird.

Diese Aufgabe wird ausgehend von einer Vorrichtung gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der organische Stoff und der mineralische Stoff in dem ersten Behälter in einer Längsrichtung zwischen dem oberen Ende des ersten Behälters und dem unteren Ende des ersten Behälters in Schichten angeordnet ist, und wobei in Längsrichtung von dem unteren Ende zu dem oberen Ende des ersten Behälters aufeinander folgend eine Buchenholzschicht, eine Baumwollschicht, eine Bergkristallschicht, eine weitere Baumwollschicht, eine Quarzsandschicht, eine weitere Buchenholzschicht, eine Rosenquarzschicht, eine weitere Baumwollschicht, eine Mikroorganismen-Pulverschicht und eine weitere Baumwollschicht angeordnet sind, und wobei eine sich in die Längsrichtung erstreckende erste Kupferspirale in dem ersten Behälter angeordnet ist, und wobei der erste Behälter und ein zweiter Behälter parallel nebeneinander angeordnet und verbunden sind, und wobei in dem zweiten Behälter in Längsrichtung von einem unteren Ende des zweiten Behälters zu einem oberen Ende des zweiten Behälters aufeinander folgend eine Baumwollschicht, eine Quarzsandschicht, eine weitere Baumwollschicht, eine Mikroorganismen-Pulverschicht und eine Baumwollschicht angeordnet sind.

Durch diese geschichtete Anordnung von organischen und mineralischen Stoffen in einem geschlossenen Behälter wird ein Mittel zur kontaktlosen und somit auch wartungsarmen Aktivierung und Stimulierung von für Rotteprozesse der Gülle notwenigen Mikroorganismen bereitgestellt. Dabei erfolgt die Aktivierung der Mikroorganismen durch bioenergetische Strahlung mit speziellen Frequenzen und Informationen, die von der Vorrichtung ausgesendet werden.

Durch die Förderung der aeroben Rotteprozesse durch die aktivierten Mikroorganismen, kommt es insbesondere zu einer Reduzierung des Ammoniakgehalts und weniger Geruchsbelästigung durch die Gülle. Ferner kommt es zu einer Homogenisierung der Gülle, geringere Grundwasserverschmutzung, geringere Boden- und Pflanzenbelastung nach der Düngung mit vitalisierter Gülle sowie besserer Humusbildung und gute Pflanzenverträglichkeit.

Ferner werden insbesondere anaerobe, also unter mangelnder Zufuhr von Sauerstoff ablaufende Zersetzungsprozesse vermieden oder zumindest verringert. Damit wird häufiges Aufrühren und Belüften der Gülle überflüssig. Auftretende Folgen wie Ammoniakfreisetzung und Geruchsbelästigung, Blattverätzungen beim Ausbringen der Gülle auf die Felder, eine Schwimmdecke und eine Sinkschicht und umweltbelastende Wirkungen werden vermieden oder zumindest verringert.

In einer vorteilhaften Weiterbildung der Vorrichtung ist eine sich in Längsrichtung erstreckende rechtsdrehende erste Kupferspirale (Lakhovsky-Spirale) in dem ersten Behälter angeordnet, wobei zwei sich in Längsrichtung erstreckende, insbesondere hintereinander angeordnete Orgonstrahler von der ersten Kupferspirale umgeben sind. Dadurch wird die Aussendung der bioenergetischen Frequenzen und Informationen verstärkt und fokussiert.

Ein günstiges Frequenzspektrum der bioenergetischen Strahlung kann durch die Anordnung in Längsrichtung von dem unteren Ende zu dem oberen Ende des ersten Behälters mit aufeinanderfolgend einer Buchenholzschicht, einer Baumwollschicht, einer Bergkristallschicht, einer weiteren Baumwollschicht, einer Quarzsandschicht, einer weiteren Buchenholzschicht, einer Rosenquarzschicht, einer weiteren Baumwollschicht, einer Mikroorganismen-Pulverschicht sowie einer weiteren Baumwollschicht erlangt werden.

In einer nicht zur Erfindung gehörenden Variante der Vorrichtung können mit symmetrischer Abstrahlung und räumlich gleichmäßigen Aktivierung der Mikroorganismen in der Gülle von einer Mitte des ersten Behälters ausgehend ein in Richtung des oberen Endes und/oder in Richtung des unteren Endes aufeinanderfolgend eine Buchenholzschicht, eine Baumwollschicht, eine Bergkristallschicht, eine weitere Baumwollschicht, eine Quarzsandschicht, eine weitere Buchenholzschicht, eine Rosenquarzschicht, eine weitere Baumwollschicht, eine Mikroorganismenpulverschicht, und eine weitere Baumwollschicht angeordnet sein.

Erfindungsgemäß sind ein erster Behälter und ein zweiter Behälter in Längsrichtung parallel nebeneinander angeordnet ausgerichtet und miteinander verbunden.

Zur spektralen Ergänzung der Frequenzen sind in dem zweiten Behälter in Längsrichtung von einem unteren Ende des zweiten Behälters zu einem oberen Ende des zweiten Behälters aufeinanderfolgend eine Baumwollschicht, eine Quarzsandschicht, eine weitere Baumwollschicht, eine Mikroorganismen-Pulverschicht und eine Baumwollschicht angeordnet.

In einer ebenfalls nicht zur Erfindung gehörenden Variante können mit symmetrischer Ausstrahlung und Aussendung von Frequenzen und Informationen zur räumlich gleichmäßigen Aktivierung der Mikroorganismen in der Gülle von der Mitte des zweiten Behälters ausgehend in Richtung des oberen Endes und des unteren Endes aufeinanderfolgend eine Baumwollschicht, eine Quarzsandschicht, eine weitere Baumwollschicht, eine Mikroorganismen-Pulverschicht und eine weitere Baumwollschicht angeordnet sein.

In einer vorteilhaften Weiterbildung mit stärkerer Sendeleistung und Strahlungsleistung sind in dem zweiten Behälter zwei Reagenzgläser mit darin gehaltenem Aktivwasser umfassend ein Heilquellwasser sowie Mikroorganismen angeordnet, wobei eine sich in Längsrichtung erstreckende zweite Kupferspirale in dem zweiten Behälter angeordnet ist und die Reagenzgläser umgibt. Dabei ist die Kupferspirale zweckmäßigerweise linksdrehend als Lakhovsky-Spirale ausgestaltet. Dadurch werden in Wechselwirkung mit der rechtsdrehenden ersten Kupferspirale ausgleichende Effekte bewirkt, die sich besonders vorteilhaft auf die Mikroorganismen auswirken.

Die Kupferspirale ist aus Kupfer gefertigt, kann alternativ aber auch aus einer Kupferlegierung gefertigt sein. Das Aktivwasser umfasst ein Heilquellwasser sowie Mikroorganismen. Die Quarzsandschicht, die Bergkristallschicht, die Quarzsandschicht sowie die Rosenquarzschicht bestehen oder beinhalten zumindest den jeweiligen Stoff und sind als mineralischer Stoff zu verstehen. Die Baumwollschicht, die Buchenholzschicht und die Mikroorganismen-Pulverschicht bestehen aus oder beinhalten den jeweiligen Stoff und sind als organischer Stoff zu verstehen.

Um eine stärkere Fokussierung und Durchdringung der Frequenzen in der Gülle zu bewirken, ist ein Orgonstrahler zwischen einem Reagenzglasende und dem oberen Ende und/oder dem unteren Ende des zweiten Behälters angeordnet. Dabei ist der Orgonstrahler ein aus Metall gefertigter Zylinder mit sich verjüngenden und spitzen Enden.

### BEVORZUGTE AUSFÜHRUNGSBEISPIELE DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine erfindungsgemäße Vorrichtung mit einem ersten Behälter und einem zweiten Behälter, die parallel nebeneinander angeordnet und verbunden sind;
- Fig. 2: in schematischer Ansicht die Vorrichtung in einem oberirdischen Güllebecken;
- Fig. 3: in schematischer Darstellung die Vorrichtung in einem unterirdischen Gülletreibkanal sowie
- Fig. 4: die Vorrichtung in einer quergeschnittenen Seitenansicht.

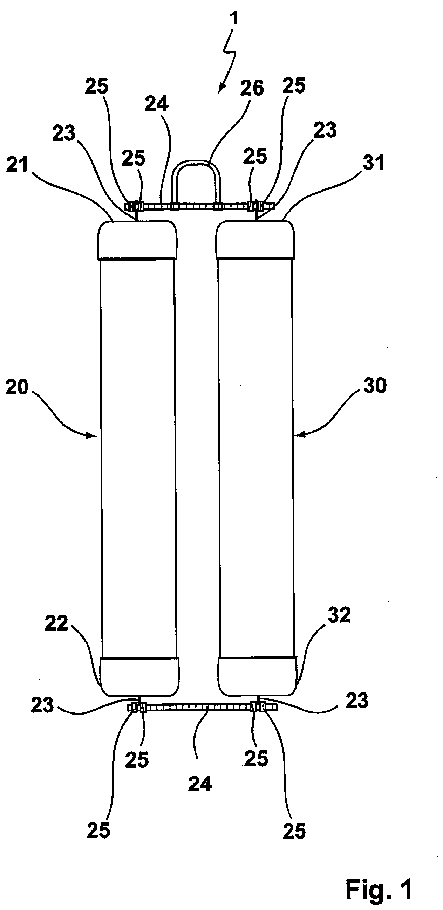

Fig. 1 zeigt ein Ausführungsbeispiel der als Gülle-Vitalisierer ausgestalteten Vorrichtung 1 zur Aktivierung von Mikroorganismen in Gülle, umfassend einen ersten Behälter 20 und einen zweiten Behälter 30. Die Behälter 20, 30 sind aus einem zylindrischen PVC-Rohr gefertigt, wobei obere Enden 21, 31 und untere Enden 22, 32 jeweils aus einer PVC-Kappe gefertigt sind und mit dem PVC-Rohr den luft- und wasserdichten ersten Behälter 20 und zweiten Behälter 30 ausbilden. An den oberen Enden 21, 31 und den unteren Enden 22, 32 ist jeweils eine Ringschraube 23 zur Aufnahme einer aus Stahl gefertigten Gewindestange 24 ausgebildet. Die Gewindestange 24 ist mit Stahlschrauben 25 an den Ringschrauben 23 befestigt. Somit sind das obere Ende 21 des ersten Behälters 20 und das obere Ende 31 des zweiten Behälters 30 über die Gewindestange 24 fest miteinander verbunden. Eine weitere Gewindestange 24 verbindet das untere Ende 22 des ersten Behälters 20 mit dem unteren Ende 32 des zweiten Behälters 30 durch Verschraubung mit den Stahlschrauben 25. Ein Bügel 26 ist zwischen den oberen Ende 21 des ersten Behälters 20 und dem oberen Ende 31 des zweiten Behälters 30 an der Gewindestange 24 befestigt. Der Bügel 26 dient zur Aufnahme eines Seils oder einer Kette, mit der die Vorrichtung 1 hängend transportiert oder gehalten werden kann. Der erste Behälter 20 und der zweite Behälter 30 sind durch die Befestigung mit Schrauben 25 an der Gewindestange 24 fest miteinander verbunden und parallel ausgerichtet. Da die Stahlschrauben 25 jeweils auf gegenüberliegenden Seiten der Ringschraube 23 auf der Gewindestange 24 angeordnet sind, wird durch eine Klemmung eine starre Verbindung mit fest definierter Ausrichtung und Beabstandung zwischen dem ersten Behälter 20 und dem zweiten Behälter 30 ermöglicht. Eine Ausrichtung und Veränderung des Abstandes zwischen dem ersten Behälter 20 und dem zweiten Behälter 30 können durch Anpassung einer Position der Schrauben 25 auf der Gewindestange 24 erfolgen. Somit ist eine Feinjustierung und Einstellung einer Interferenz von bioenergetischen Strahlungswellen des ersten Behälters 20 und des zweiten Behälters 30 möglich. Im Ergebnis können damit besonders hohe bioenergetische Wirkleistung erzielt werden.

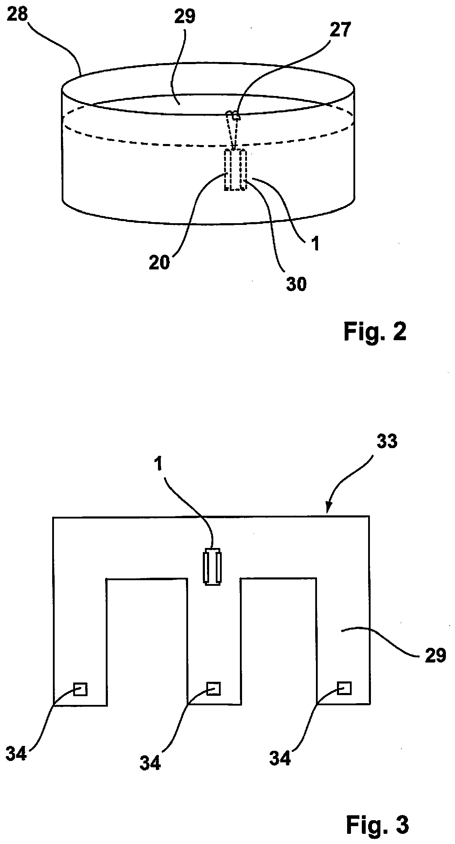

Fig. 2 zeigt ein oberirdisches Güllebecken 28 mit darin bevorrateter Gülle 29. Die Vorrichtung 1 ist an einem Seil 27 hängend in der Gülle 29 des Güllebeckens 28 eingelassen. Die unteren Enden 22, 32 befinden sich dabei ca. 0,5 m bis 1 m über dem Boden des Güllebeckens.

Fig. 3 zeigt in schematischer Draufsicht üblicherweise unter Stallungen in der Viehhaltung zur Anwendung kommende unterirdische Gülletreibkanal 33 mit Zugängen 34. Durch einen Zugang 34 ist die Vorrichtung 1 in den Gülle-Treibkanal 33 eingebracht und bewirkt dort die Aktivierung von Mikroorganismen zur Erzeugung und Förderung von aeroben Rotteprozessen in der Gülle. Dabei ist insbesondere eine zentrale Positionierung der Vorrichtung 1 in dem Gülle-Treibkanal 33 zweckmäßig, da somit die von der Vorrichtung ausgehenden Frequenzen und Informationen eine große Ausbreitung haben. Die Anordnung der Vorrichtung 1 in der Gülle 29 ist besonders vorteilhaft, da sich somit die Frequenzen und Informationen besonders gut in der als Trägermedium fungierenden Gülle 29 ausbreiten.

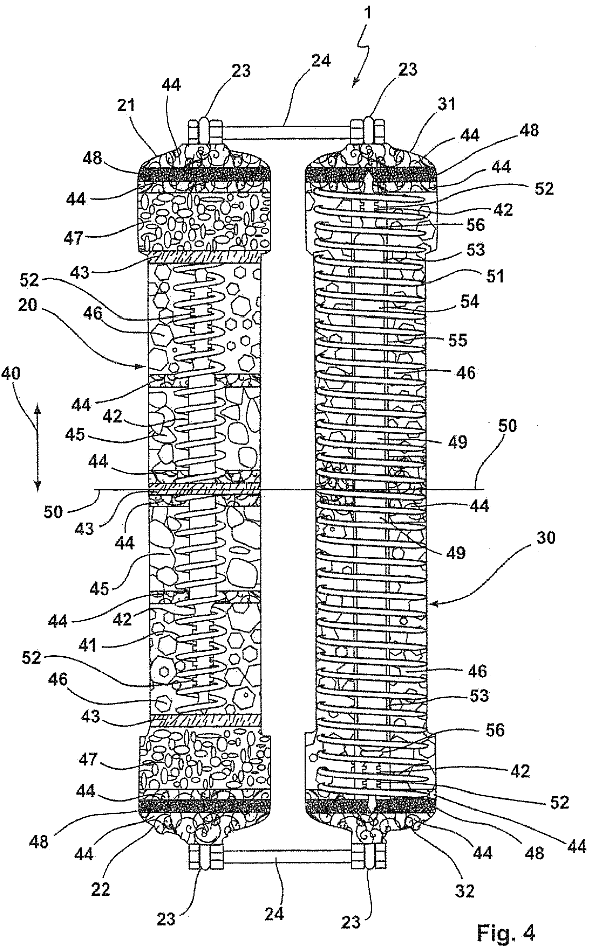

Fig. 4 zeigt in dem Ausführungsbeispiel die Vorrichtung 1 in einer geschnittenen Seitenansicht. In dieser Ansicht sind eine erste Kupferspirale 41 und eine zweite Kupferspirale 51 als nicht geschnitten dargestellt. Der erste Behälter 20 und der zweite Behälter 30 erstrecken sich in einer Längsrichtung 40 von dem oberen Ende 21, 31 zu dem unteren Ende 22, 32 über ca. 50 cm. Zwischen der Ringschraube 23 am oberen Ende 21 des ersten Behälters 20 und der Ringschraube 23 am oberen Ende 31 des zweiten Behälters 30, die über die Gewindestange 24 verbunden sind, liegen ca. 10 cm. Eine Wandung des ersten Behälters 20 ist aus einem zylindrischen PVC-Rohr gebildet, wobei das obere Ende 21 und das untere Ende 22 jeweils durch eine PVC-Kappe gebildet einen luft- und wasserdichten Verschluss bilden. In einer Mitte 50 des ersten Behälters 20 ist eine Buchenholzschicht 43 in Ausgestaltung einer kreisrunden 1 cm dicken Buchenholzscheibe angeordnet. Von dieser Buchenholzschicht 43 ausgehend sind symmetrisch in Längsrichtung 40 in Richtung des oberen Endes 21 und in Richtung des unteren Endes 22 aufeinander folgend eine Baumwollschicht 44, eine Bergkristallschicht 45, eine weitere Baumwollschicht 44, eine Quarzsandschicht 46, eine weitere Buchenholzschicht 43, eine Rosenquarzschicht 47, eine weitere Baumwollschicht 44, eine Mikroorganismen-Pulverschicht 48, sowie abschließend eine weitere Baumwollschicht 44 angeordnet. Dabei verlaufen Übergänge zwischen den Schichten orthogonal zu der Längsrichtung 40. Eine jeweilige Schicht weist eine gleichmäßige Dicke auf wobei die Übergänge zwischen den Schichten abrupt sind. Schichten aus organischem Stoff umfassen die Buchenholzschicht 43, die Baumwollschicht 44, sowie die Mikroorganismen-Pulverschicht 48. Die Rosenquarzschicht 47, die Quarzsandschicht 46 sowie die Bergkristallschicht 45 sind als Schichten aus mineralischem Stoff anzusehen. Schichten aus mineralischem Stoff in dem Behälter sind im Verhältnis zu Schichten aus organischem Stoff dick. Somit nehmen die mineralischen Stoffe auch deutlich mehr Volumen in den ersten Behälter 20 ein. Die Schichten bestehen aus dem jeweiligen Stoff, also Buchenholz, Baumwolle, Rosenquarz, Quarzsand beziehungsweise Bergkristall. Gegebenenfalls kann der jeweilige Stoff mit anderen Stoffen gemischt in den Schichten vorkommen. Zwei Orgonstrahler 42 verlaufen sich in Längsrichtung 40 erstreckend zentral in dem ersten Behälter 20. Eine rechtsdrehende erste Kupferspirale 41 erstreckt sich ebenfalls in Längsrichtung zentral zwischen den oberen Ende 21 und den unteren Ende 22 des ersten Behälters 20, wobei Windungen der ersten Kupferspirale 41 die Orgonstrahler 42 umgeben. Die rotationssymmetrischen Orgonstrahler 42 weisen an ihren Endbereichen neun, zwischen Rillen ausgebildete, Rippen 52 auf, durch die eine Leistungssteigerung bei der Aussendung von Frequenzen und Informationen bewirkt wird. In dem zweiten Behälter 30 ist von der Mitte 50 ausgehend ein sich in Längsrichtung 40 erstreckendes Acrylglasrohr 55 angeordnet. In dem Acrylglasrohr 55 ist ein Aktivwasser 54 beinhaltendes Reagenzglas 53 zentral angeordnet. Das Acrylglasrohr 55 dient zum Schutz des Reagenzglases 53. Im Bereich des oberen Endes 31 und des unteren Endes 32 des zweiten Behälters 30 sind an Reagenzglasenden 56 jeweils ein als Orgonstrahler 42 ausgebildeter Minibioenergieakkumulator angeordnet. In der Mitte 50 des zweiten Behälters 30 ist im Reagenzglas 53 ein Gummistopfen 49 angeordnet. Von der Mitte ausgehend sind sich in Längsrichtung 40 aufeinanderfolgend und das Acrylglasrohr 55 umgebend in Richtung des oberen Endes 31 und des unteren Endes 32 des zweiten Behälters 30 eine Baumwollschicht 44, eine Quarzsandschicht 46, eine weitere Baumwollschicht 43, eine Mikroorganismen-Pulverschicht 48, sowie abschließend eine weitere Baumwollschicht 44 angeordnet. Eine zweite Kupferspirale 51 erstreckt sich in Längsrichtung 40 zwischen dem oberen Ende 31 und dem unteren Ende 32 des zweiten Behälters 30, wobei Windungen der zweiten Kupferspirale 51 den Orgonstrahler 42, sowie das Reagenzglas 53 und das Acrylglasrohr 55 umgeben.

Die zweite Kupferspirale 51 ist als linksdrehende Lakhovsky-Spirale ausgebildet und die Windungen verlaufen im Bereich des die Wandung des zweiten Behälters 30 bildenden PVC-Rohres. Die Reagenzgläser 53 und das Acrylglasrohr 55 sind von der zweiten Kupferspirale 51 umgeben. Einen Großteil des Volumens im zweiten Behälter 30 wird durch die Quarzsandschicht 46 ausgefüllt. Durch die hier beschriebene Ausgestaltung der Vorrichtung 1 mit verschiedenen Stoffen, Schichtdicken, Proportionen und Abständen sowie dem Aktivwasser 54, dem Orgonstrahler 42 und der ersten Kupferspirale 41 in rechtsdrehender Ausgestaltung und der zweiten Kupferspirale 51 in linksdrehender Ausgestaltung wird eine starke bioenergetische Strahlung, Sendeleistung und ein breites Frequenzspektrum erzeugt. Dadurch werden für die aeroben Zersetzungsprozesse wichtige Mikroorganismen, wie sauerstoffliebende Bakterien, ammoniakbindende Schimmelpilze, Hefen, Strahlenpilze sowie Regenwürmer aktiviert.

### Bezugszeichenliste:

- 1: Vorrichtung
- 20: erster Behälter
- 21: oberes Ende
- 22: unteres Ende
- 23: Ringschraube
- 24: Gewindestange
- 25: Stahlschrauben
- 26: Bügel
- 27: Seil
- 28: Gülle-Becken
- 29: Gülle
- 30: zweiter Behälter
- 31: oberes Ende
- 32: unteres Ende
- 33: Gülle-Treibkanäle
- 34: Zugang
- 40: Längsrichtung
- 41: erste Kupferspirale
- 42: Orgonstrahler
- 43: Buchenholzschicht
- 44: Baumwollschicht
- 45: Bergkristallschicht
- 46: Quarzsandschicht
- 47: Rosenquarzschicht
- 48: Mikroorganismen-Pulverschicht
- 49: Gummistopfen
- 50: Mitte
- 51: zweite Kupferspirale
- 52: Rippe
- 53: Reagenzglas
- 54: Aktivwasser
- 55: Acrylglasrohr
- 56: Reagenzglasende

## Patentansprüche

1. Vorrichtung (1) zur Aktivierung von Mikroorganismen in Gülle, umfassend einen ersten Behälter (20) mit einem oberen Ende (21) und mit einem unteren Ende (22), mit in dem Behälter (20) angeordnetem organischen Stoff und mineralischen Stoff, wobei
der organische Stoff und der mineralische Stoff in dem ersten Behälter (20) in einer Längsrichtung (40) zwischen dem oberen Ende (21) des ersten Behälters (20) und dem unteren Ende (22) des ersten Behälters (20) in Schichten angeordnet ist, und wobei in Längsrichtung (40) von dem unteren Ende (22) zu dem oberen Ende (21) des ersten Behälters (20) aufeinander folgend eine Buchenholzschicht (43), eine Baumwollschicht (44), eine Bergkristallschicht (45), eine weitere Baumwollschicht (44), eine Quarzsandschicht (46), eine weitere Buchenholzschicht (43), eine Rosenquarzschicht (47), eine weitere Baumwollschicht (44), eine Mikroorganismen-Pulverschicht (48) und eine weitere Baumwollschicht (44) angeordnet sind, und wobei eine sich in die Längsrichtung (40) erstreckende erste Kupferspirale (41) in dem ersten Behälter (20) angeordnet ist,
und wobei
der erste Behälter (20) und ein zweiter Behälter (30) parallel nebeneinander angeordnet und verbunden sind, und wobei in dem zweiten Behälter (30) in Längsrichtung (40) von einem unteren Ende (32) des zweiten Behälters (30) zu einem oberen Ende (31) des zweiten Behälters (30) aufeinander folgend eine Baumwollschicht (44), eine Quarzsandschicht (46), eine weitere Baumwollschicht (44), eine Mikroorganismen-Pulverschicht (48) und eine Baumwollschicht (44) angeordnet sind.

2. Vorrichtung (1) nach Anspruch 1,
**dadurch gekennzeichnet,**
**dass** eine sich in die Längsrichtung (40) erstreckende zweite Kupferspirale (51) in dem zweiten Behälter (30) angeordnet ist.

3. Vorrichtung (1) nach Anspruch 1 oder 2,
**dadurch gekennzeichnet,**
**dass** in dem zweiten Behälter (30) zwei Reagenzgläser (52) mit darin gehaltenem Aktivwasser (54) umfassend ein Heilquellwasser sowie Mikroorganismen angeordnet sind.

4. Vorrichtung (1) nach Anspruch 3,
**dadurch gekennzeichnet,**
**dass** die Reagenzgläser (52) von der zweiten Kupferspirale (51) umgeben sind.

## Claims

1. An apparatus (1) for activating microorganisms in slurry comprising a first container (20) having an upper end (21) and having a lower end (22), having organic material and mineral material arranged in the container (20),
wherein
the organic material and the mineral material are arranged in a longitudinal direction (40) in layers in the first container (20) between the upper end (21) of the first container (20) and the lower end (22) of the first container (20), and wherein a beechwood layer (43), a cotton layer (44), a rock crystal layer (45), a further cotton layer (44), a quartz sand layer (46), a further beechwood layer (43), a rose quartz layer (47), a further cotton layer (44), a microorganism powder layer (48), and a further cotton layer (44) are arranged following on from one another in the longitudinal direction (40) from the lower end (22) to the upper end (21) of the first container, and wherein a first copper spiral (41) extending in the longitudinal direction (40) is arranged in the first container (20),
and wherein
the first container (20) and a second container (30) are arranged and connected in parallel next to one another, and wherein a cotton layer (44), a quartz sand layer (46), a further cotton layer (44), a microorganism powder layer (48), and a cotton layer (44) are arranged following on from one another in the longitudinal direction (40) from a lower end (32) of the second container (30) to an upper end (31) of the second container (30).

2. An apparatus (1) in accordance with claim 1,
**characterized in that**
a second copper spiral (51) extending in the longitudinal direction (40) is arranged in the second container (30).

3. An apparatus in accordance with claim 1 or claim 2,
**characterized in that**
two test tubes (52) having active water (54) comprising a mineral spring water and microorganisms held therein are arranged in the second container (30).

4. An apparatus (1) in accordance with claim 3,
**characterized in that**
the test tubes (52) are surrounded by the second copper spiral (51).

## Revendications

1. Dispositif (1) destiné à l'activation de microorganismes dans du lisier, comprenant un premier contenant (20) doté d'une extrémité supérieure (21) et d'une extrémité inférieure (22), avec de la matière organique et de la matière minérale disposées dans le contenant (20), dans lequel
la matière organique et la matière minérale sont disposées en couches dans le premier contenant (20) dans une direction longitudinale (40) entre l'extrémité supérieure (21) du premier contenant (20) et l'extrémité inférieure (22) du premier contenant (20), et dans lequel une couche de bois de hêtre (43), une couche de coton (44), une couche de cristal de roche (45), une autre couche de coton (44), une couche de sable silicieux (46), une autre couche de bois de hêtre (43), une couche de quartz rose (47), une autre couche de coton (44), une couche de poudre de microorganismes (48) et une autre couche de coton (44) sont disposées successivement dans la direction longitudinale (40) de l'extrémité inférieure (22) à l'extrémité supérieure (21) du premier contenant (20) et dans lequel une première spirale en cuivre (41) s'étendant dans la direction longitudinale (40) est disposée dans le premier contenant (20),
et dans lequel
le premier contenant (20) et un second contenant (30) sont disposés et reliés parallèlement l'un à côté de l'autre, et dans lequel une couche de coton (44), une couche de sable silicieux (46), une autre couche de coton (44), une couche de poudre de microorganismes (48) et une couche de coton (44) sont disposées dans le second contenant (30) successivement dans la direction longitudinale (40) d'une extrémité inférieure (32) du second contenant (30) à une extrémité supérieure (31) du second contenant (30).

2. Dispositif (1) selon la revendication 1,
**caractérisé en ce que**
une seconde spirale en cuivre (51) s'étendant dans la direction longitudinale (40) est disposée dans le second contenant (30).

3. Dispositif (1) selon la revendication 1 ou 2,
**caractérisé en ce que**
deux éprouvettes (52) avec, maintenue dans celles-ci, de l'eau active (54) comprenant une eau de source thermale ainsi que des microorganismes sont disposées dans le second contenant (30).

4. Dispositif (1) selon la revendication 3,
**caractérisé en ce que**
les éprouvettes (52) sont entourées par la seconde spirale en cuivre (51).
